Europäisches Patentamt

European Patent Office

Office européen des brevets

(19)

(11) Numéro de publication: **0 260 183 B1**

# FASCICULE DE BREVET EUROPEEN

(45) Date de publication de fascicule du brevet:
**02.05.91**

(51) Int. Cl.5: **B27N 1/00,** //D21C9/18

(21) Numéro de dépôt: **87401962.3**

(22) Date de dépôt: **02.09.87**

(54) **Matériaux composites à base d'une matrice de résine thermodurcissable renforcée par des fibres cellulosiques discontinues et procédé de fabrication.**

(30) Priorité: **04.09.86 FR 8612414**

(43) Date de publication de la demande:
**16.03.88 Bulletin 88/11**

(45) Mention de la délivrance du brevet:
**02.05.91 Bulletin 91/18**

(84) Etats contractants désignés:
**AT BE CH DE ES FR GB GR IT LI LU NL SE**

(56) Documents cités:
**WO-A-84/00970**
**BE-A- 696 749**
**DE-C- 722 782**
**FR-A- 2 520 292**
**FR-A- 2 590 833**

**ABSTRACT BULLETIN OF THE INSTITUTE OF PAPER CHEMISTRY, vol. 51, no. 9, mars 1981, page 982, résumé no. 9205, Appleton, Wisconsin, US; & JP-A-80 116 892 (08-09-1980)**

(73) Titulaire: **LA CELLULOSE DU PIN**
**353, bd du Président Wilson**
**F-33200 Bordeaux(FR)**

(72) Inventeur: **Pommier, Jean-Claude**
**35 Allée de Gascogne**
**F-33170 Gradignan(FR)**
Inventeur: **Poustis, Joel**
**3 Allée de Saintonge Cap de Bos**
**F-33600 Pessac(FR)**

(74) Mandataire: **Muller, René**
**SAINT-GOBAIN RECHERCHE 39, quai Lucien Lefranc**
**F-93304 Aubervilliers(FR)**

## Description

L'invention concerne la fabrication de matériaux composites dont la matrice est constituée par une résine thermodurcissable et dont le renfort est constitué par un matériau à base de fibres cellulosiques discontinues et elle a plus précisément pour objet un procédé de fabrication de tels matériaux.

Les fibres cellulosiques se placent sur le marché des renforts à un niveau comparable à celui des fibres de verre au regard de leurs caractéristiques mécaniques et de leur densité. Elles sont même plus avantageuses par leur coût, et c'est pourquoi on cherche à valoriser ce type de renfort.

On connait par exemple par la publication de brevet européen EP-A-0 062 533 un matériau composite comprenant des fibres cellulosiques dispersées dans une matrice de polychlorure de vinyle. Les fibres cellulosiques sont, selon ce document, mélangées avec la matrice et un agent de liaison pour améliorer l'adhérence entre les fibres et la matrice.

On connait également par le brevet US-A- 3 943 079 un moyen de favoriser la dispersion de fibres cellulosiques discontinues dans une matrice constituée d'un polymère organique en prétraitant les fibres par une composition constituée d'un lubrifiant et d'un polymère thermoplastique.

L'invention vise à fabriquer des matériaux composites comprenant des fibres cellulosiques dans une matrice constituée d'une résine thermodurcissable notamment une résine de polyester insaturé. Elle vise essentiellement à fabriquer des composites de grande diffusion, sous forme de compounds, de feutres, de sandwichs...

Une résine de polyester insaturée est particulièrement adaptée à la préparation de composites par sa nature thermodurcissable. C'est une résine liquide qui contient des chaines bidimensionnelles et du styrène en excès. En présence d'un catalyseur, avec ou sans apport d'énergie, il y a réticulation par formation de ponts styrène et la résine durcit. Cependant, quand on essaie de former des composites fibres cellulosiques-polyester, on n'obtient généralement pas un produit satisfaisant. Il est notamment fort difficile de faire pénétrer la résine dans un matelas constitué de fibres cellulosiques entremêlées et cette incompatibilité entre les deux produits conduit, après réticulation de la résine et moulage, à un matériau non homogène et qui ne présente pas toujours les propriétés mécaniques souhaitées.

On ne sait pas exactement à quoi est due cette incompatibilité mais on sait qu'une fibres cellulosique a un caractère plutôt hydrophile avec ses motifs hydroxyles, tandis qu'une résine polyester a un caractère plutôt lipophile dû à la présence de ses longues chaines carbonées.

Dans le document WO 84/00970 on décrit un matériau composite qui utilise en tant que renfort, une poudre ou des grains obtenus par broyage d'un matériau constitué de noyaux ou d'écorces de fruits. Le matériau de départ est lavé et séché avant le broyage. Ce document ne décrit pas l'utilisation en tant que renfort de fibres cellulosiques obtenues à partir des pâtes de l'industrie papetière.

L'invention vise à rendre compatible des fibres cellulosiques et une résine thermodurcissable, notamment une résine polyester de façon à pouvoir préparer un matériau composite homogène qui présente des caractéristiques de reprise d'humidité, de rupture et de module en flexion satisfaisantes.

Pour atteindre ce but, l'invention propose un procédé de fabrication d'un matériau composite comprenant une matrice à base de résine thermodurcissable, notamment une résine polyester, une résine époxy, et un renfort à base de fibres cellulosiques discontinues obtenues à partir d'une pâte de l'industrie papetière choisie parmi les pâtes chimiques, les pâtes thermo-mécaniques, les pâtes chimico-thermo-mécaniques, un mélange de ces pâtes dans lequel, avant de mettre en présence la résine thermodurcissable et le renfort à base de fibres cellulosiques, on effectue un traitement préalable du renfort à base de fibres cellulosiques qui consiste à abaisser sa teneur en eau jusqu'à une valeur nulle ou quasi nulle.

Le procédé selon l'invention s'applique avantageusement à la fabrication d'un matériau composite à base de résine polyester. La demanderesse a en effet constaté que l'élimination de l'eau modifiait la surface des fibres de cellulose, de telle façon que la pénétration ultérieure de la résine polyester dans un matériau cellulosique était facilitée. On suppose que dans ces conditions, la place laissée par l'eau est plus facilement comblée par la résine polyester que dans le cas des fibres n'ayant pas subi ce traitement. Les fibres cellulosiques contiennent généralement à atmosphère ambiante, jusqu'à 10 % environ en poids d'eau et l'élimination de cette eau modifie sensiblement l'état de surface des fibres.

Le traitement selon l'invention peut être réalisé selon plusieurs modes. D'une façon générale, on réalise un traitement thermique et/ou chimique.

Dans un premier mode de réalisation, on effectue un traitement thermique qui consiste à chauffer les fibres dans des conditions telles que leur teneur en eau après le traitement soit nulle ou quasi nulle.

Dans un deuxième mode de réalisation, le traitement consiste en un traitement chimique au moyen d'une composition d'ensimage à base essentiellement d'alcool.

Les compositions d'ensimage usuellement utilisées, notamment dans le traitement des fibres de verre,

EP 0 260 183 B1

sont des compositions complexes, qui comprennent un grand nombre de charges, agents de pontage, etc...

Au contraire, pour résoudre le problème posé, la demanderesse a mis au point une composition comprenant essentiellement une solution aqueuse d'alcool et éventuellement quelques additifs.

Parmi tous les mono ou polyalcools disponibles, on choisira avantageusement l'éthanol ou l'alcool polyvinylique. D'autres alcools, tels que le butanol ou l'heptanol, peuvent également être cités.

Dans un troisième mode de réalisation, le traitement consiste en un traitement chimique au moyen d'un solvant diélectrique à base de dérivés fluorés, généralement effectué par pulvérisation sur les fibres.

Il va de soi qu'il est possible de combiner plusieurs traitements, par exemple un traitement thermique et un traitement chimique avec une composition à base d'alcool.

L'invention s'applique aux fibres cellulosiques en général, telles qu'elles sont obtenues à partir du bois. On peut citer comme source de fibres cellulosiques tous les types de pâtes préparées à partir du bois, sans qu'il soit nécessaire que ces pâtes soient parfaitement purifiées et débarassées de lignine.

La source de fibres cellulosiques est par exemple une pâte chimique écrue ou blanchie telle qu'elle est utilisée pour la préparation du papier kraft, ou du fluff, une pâte thermo-mécanique telle que celle utilisée dans la fabrication du papier journal, ou encore une pâte chimico-thermo-mécanique, ou un mélange de ces pâtes qui serviront par exemple à la fabrication de papiers ou cartons.

Différentes variantes de l'invention correspondent à des formes différentes de mise en oeuvre du matériau fibreux cellulosique à traiter.

Dans un premier mode de réalisation, on prépare un matelas de fibres cellulosiques et on le traite par la chaleur et/ou chimiquement.

Dans un deuxième mode de réalisation, on prépare des fibres en vrac que l'on traite de la même façon par la chaleur et/ou chimiquement.

Dans un troisième mode de réalisation, on prépare un matériau de fibres cellulosiques constitué de deux feuilles de papier kraft enfermant un matelas plan ou ondulé de fibres cellulosiques et on le traite par la chaleur et/ou chimiquement.

Quel que soit le mode de réalisation choisi, matelas de pâte, pâte en vrac ou assemblage de papier et de matelas sous quelques formes que ce soient, la suite du procédé est identique et comprend les opérations habituelles de préparation d'un matériau composite. Le matériau traité est placé dans un moule où il est mis en contact avec la résine accompagnée éventuellement d'un accélérateur de réticulation. Dans le moule on établit des conditions de température, et de pression, associées à une durée de séjour convenant pour assurer la réticulation de la résine. On récupère ensuite le matériau, et on détermine la quantité de fibres qu'il comporte.

D'autres caractéristiques et avantages de l'invention apparaitront au cors de la description suivante d'exemples de réalisation. Sur ces exemples, on a effectué des mesures mettant en évidence des caractéristiques du composite obtenu par le procédé selon l'invention.

Le test de reprise d'humidité permet d'évaluer le comportement vis-à-vis de l'eau du matériau composite. Selon ce test, on immerge totalement un échantillon de poids connu du composite dans de l'eau ayant un pH de 7 environ, et on mesure l'augmentation de poids au cours du temps. La reprise d'humidité est donnée par le pourcentage d'augmentation pondérale après 1000 heures d'immersion.

EXEMPLE 1

On prépare une feuille de pâte fluff à partir de pin maritime par le procédé au bisulfite d'ammonium.

La pâte contient essentiellement des fibres longues. Elle est traitée pour pouvoir être facilement défibrée sans détérioration. Elle est caractérisée par une densité de 0,6, une épaisseur de 1,5 mm et un poids au m² de 900 g/m². A partir de cette feuille on fait un "compound", c'est à dire un matelas de fibres en vrac de 140 mm x 15 mm x 5 mm.

On soumet 16 g de cette pâte à un traitement thermique en la portant pendant 1 heure dans une étuve à 100° C.

On la met ensuite dans un moule avec 64 g de la résine polyester commercialisée par la société SCHEBY, sous l'appellation Fourniplast. On presse pendant 15 minutes à 100° C et avec une pression de 20 kg/cm².

Le produit fini a un aspect homogène, et il présente un taux de fibres égal à 26 % en poids du composite.

On a par ailleurs réalisé un exemple comparatif qui vise à comparer les caractéristiques mécaniques d'un composite préparé avec des fibres de verre comme renfort d'une résine polyester avec celles d'un composite préparé selon l'invention.

3

On prépare un composite comprenant 50 % en poids de fibres de verre à partir de fibres de verre en vrac que l'on place dans un moule avec une résine polyester dans des conditions identiques à celles décrites en relation avec l'exemple 1.

Les caractéristiques suivantes ont été déterminées :

|  | Exemple 1 | Exemple comparatif |
|---|---|---|
| Densité | 1,2 | 1,9 |
| Rupture en flexion (MPa) | 42 | 60 |
| Rupture spécifique (MPa) | 36 | 31,5 |
| Module en flexion (GPa) | 2,8 | 2 |
| Module spécifique (GPa) | 2,4 | 1 |
| Reprise d'humidité (%) | 6 | 8 |

On constate que les caractéristiques du produit obtenu selon l'invention sont analogues à celles d'un composite fibres de verre-résine polyester, bien que le taux de renfort dans le composite soit moins élevé. On observe même un gain notable en densité.

EXEMPLE 2

On reprend les conditions de l'exemple 1 sauf que cette fois on prépare un matelas formé de 3 épaisseurs de la même feuille de pâte fluff. Chaque feuille est soumise au traitement thermique selon l'invention puis les 3 feuilles sont assemblées en un matelas.

On met dans le moule 25 g de matelas et 78 g de la résine polyester. Le composite obtenu présent un taux de fibres égale à 40% en poids du composite, et il a un aspect homogène.

Les caractéristiques suivantes sont déterminées :

| Densité | 1,2 |
|---|---|
| Rupture en flexion (MPa) | 84 |
| Rupture spécifique (MPa) | 70 |
| Module en flexion (GPa) | 4,8 |
| Module spécifique (GPa) | 4 |
| Reprise d'humidité (%) | 10,2 |

On constate de bonnes caractéristiques de rupture et de module en flexion.

4

### EXEMPLE 3

On reprend les conditions de l'exemple 2, sauf qu'au lieu de former un matelas avec 3 épaisseurs de pâte, on forme un matelas avec 2 épaisseurs de pâte. Par ailleurs, on combine le traitement thermique précédent avec un traitement chimique qui consiste en une pulvérisation sur le matelas d'un solvant diélectrique commercialisé par la société TECHNOUTIL-CHIMIE sous l'appellation SRB1.

On pèse 32 g de matelas que l'on mélange à 100 g de résine polyester. Le composite obtenu est homogène et présente un taux de fibres égal à 40 % en poids du composite.

Les caractéristiques suivantes sont déterminées :

| Densité | 1,2 |
|---|---|
| Rupture en flexion (MPa) | 105 |
| Rupture spécifique (MPa) | 88 |
| Module en flexion (GPa) | 7 |
| Module spécifique (GPa) | 5,8 |
| Reprise d'humidité (%) | 13,3 |

Cet exemple conduit à des propriétés mécaniques particulièrement satisfaisantes.

### EXEMPLE 4

On reprend les conditions de l'exemple 3, sauf qu'on pèse 150 g de pâte et 330 g de résine polyester, et la mise sous pression dans le moule se fait sous vide. Le composite obtenu présente un taux de fibres égal à 50 % en poids de fibres.

Les caractéristiques suivantes sont déterminées :

| Densité | 1,1 |
|---|---|
| Rupture en flexion (MPa) | 98 |
| Rupture spécifique (MPa) | 89 |
| Module en flexion (GPa) | 6 |
| Module spécifique (GPa) | 5,5 |
| Reprise d'humidité (%) | 21,4 |

On observe en premier lieu une meilleure homogénéisation du composite, probablement grâce au moulage sous vide, qui constitue donc une caractéristique avantageuse de l'invention.

On constate également une reprise d'humidité plus importante.

EXEMPLE 5

On prépare un matelas tel que celui décrit à l'exemple 2. Le traitement effectué est un traitement chimique qui consiste en une pulvérisation sur le matelas d'un solvant diélectrique commercialisé par la société TECHNOUTIL-CHIMIE sous l'appellation SRB1.

On pèse 25 g du matelas ainsi traité auxquels on ajoute 78 g de résine polyester. La suite du procédé est analogue à celle décrite en relation avec les exemples précédents. Le composite obtenu présente un taux de fibres égal à 40 % en poids du composite et il est homogène.

Les caractéristiques suivantes sont déterminées :

| Densité | - 1,14 |
|---|---|
| Rupture en flexion (MPa) | 64 |
| Rupture spécifique (MPa) | 56 |

| Module en flexion (GPa) | 2 |
|---|---|
| Module spécifique (GPa) | 1,8 |
| Reprise d'humidité (%) | 11,4 |

EXEMPLE 6

On prépare un compound de fibres en vrac comme dans l'exemple 1. On le soumet à un traitement chimique effectué de la façon suivante :

On prépare un bain contenant 1 litre d'éthanol, 5 ml de soude 1 N et 5 litres d'eau. On prépare les fibres de façon à obtenir par un processus mécanique, des fibres bien séparées à partir d'un amas de fibres compactées. On trempe 45 g de fibres dans ce bain pendant 4 heures puis on filtre, on sèche, et on sépare les fibres de façon à obtenir de nouveau des fibres bien séparées.

On pèse 16 g du compound ainsi préalablement traité et on ajoute 64 g de la résine polyester. La suite du procédé est analogue à celle décrite en relation avec l'exemple 1. Le composite obtenu pèse 60 g, ce qui correspond à 26 % de fibres.

Les caractéristiques suivantes sont déterminées :

| Densité | 1,14 |
|---|---|
| Rupture en flexion (MPa) | 24 |
| Rupture spécifique (MPa) | 21 |
| Module en flexion (GPa) | 1,7 |
| Module spécifique (GPa) | 1,5 |
| Reprise d'humidité (%) | 8,5 |

## EXEMPLE 7

On prépare un matériau composite qui comprend un matelas de fibres cellulosiques pris en sandwich entre deux feuilles de papier kraft. On utilise comme matelas celui décrit en relation avec l'exemple 3. On utilise comme feuilles de papier kraft des feuilles d'un grammage de 150 g/m$^2$, avec une épaisseur de 0,22 mm et une densité de 0,7.

On soumet le sandwich à un traitement thermique pendant une heure dans une étuve portée à 80° C, puis pendant une heure dans une étuve portée à 70° C. La suite du procédé est analogue à celle décrite en relation avec l'exemple 1.

Les caractéristiques suivantes sont déterminées :

| Densité | 1,08 |
|---|---|
| Rupture en flexion (MPa) | 108 |
| Rupture spécifique (MPa) | 100 |
| Module en flexion (GPa) | 6,03 |
| Module spécifique (GPa) | 5,6 |
| Reprise d'humidité (%) | 20 |

On obtient un niveau de caractéristiques particulièrement bon.

## EXEMPLE 8

On prépare un matelas de 3 mm d'épaisseur à partir d'une pâte chimico-thermo-mécanique. La pâte utilisée est caractérisée par la présence de nombreuses fibres longues bien séparées et relativement flexibles, et par une teneur en lignine supérieure à 25 %. Elle provient d'essence d'eucalyptus.

On traite le matelas au moyen d'une composition d'ensimage à base d'un alcool polyvinylique commercialisé par la société RHONE-POULENC sous l'appellation Rhodoviol 30-5, à raison de 2 à 6 g par m² de produit fibreux.

Le produit traité est mis dans un moule avec la résine polyester. On presse pendant 3 heures environ à froid avec une pression de 6 kg/cm².

On obtient un matériau homogène qui présente un taux de fibres de 30 % environ en poids du composite.

EXEMPLE 9

On prépare un matériau composite comprenant un matelas ondulé de fibres cellulosiques pris en sandwich entre deux feuilles de papier kraft. En tant que matelas, on utilise un assemblage de fibres cellulosiques préalablement ondulé. On utilise comme feuilles kraft des feuilles de grammage de 150 g/m² avec une épaisseur de 0,22 mm. L'ondulé est un papier de 120 g/m², qui présente une amplitude d'ondulation variant entre 1,5 et 6 mm.

On soumet le sandwich à un traitement thermique pendant deux heures dans une étuve à 100°C.

On opère ensuite comme dans l'exemple 1, sauf qu'il n'est pas nécessaire de placer le matériau dans un moule, celui-ci étant déjà rigidifié par sa structure ondulé.

Les caractéristiques suivantes sont déterminées :

| Densité | 0,3 |
|---|---|
| Rupture en flexion (MPa) | 1500 |
| Rupture spécifique (MPa) | 5000 |
| Module en flexion (GPa) | 2,0 |
| Module spécifique (GPa) | 6,6 |
| Reprise d'humidité (%) | 10 |

EXEMPLE 10

On opère comme dans l'exemple 9, sauf qu'on remplace la résine polyester par une résine époxy pour composite, par exemple la résine commercialisée sous l'appellation ARALDITE par la société CIBA GEIGY ou celle commercialisée sous l'appellation EPIKOTE par la société SCHELL.

On obtient un matériau homogène dont les caractéristiques sont équivalentes à celles du composite de l'exemple 9.

**Revendications**

1. Procédé de fabrication d'un matériau composite comprenant une matrice à base d'une résine thermodurcissable et un renfort à base de fibres cellulosiques discontinues obtenues à partir d'une pâte de l'industrie papetière choisie parmi les pâtes chimiques, les pâtes thermo-mécaniques, les pâtes chimico-thermo-mécaniques, un mélange de ces pâtes, selon lequel on met en présence, dans un moule, une résine thermodurcissable, accompagnée éventuellement d'un accélérateur de réticulation et un renfort, et on établit dans le moule des conditions de température de pression associées à une durée de séjour convenant pour assurer la réticulation de la résine, caractérisé en ce qu'avant de mettre en présence la résine thermodurcissable et le renfort à base de fibres cellulosiques, on effectue un traitement préalable du renfort à base de fibres cellulosiques qui consiste à abaisser sa teneur en eau jusqu'à une valeur nulle ou quasi nulle.

2. Procédé selon la revendication 1, caractérisé en ce que le traitement est un traitement thermique qui consiste à chauffer le renfort à base de fibres cellulosiques, dans des conditions telles que sa teneur en eau après traitement soit nulle ou quasi nulle, notamment un traitement thermique consistant à chauffer le renfort pendant une heure dans une étuve à 100° C.

3. Procédé selon la revendication 1, caractérisé en ce que le traitement est un traitement chimique effectué au moyen d'une composition d'ensimage à base essentiellement d'alcool.

4. Procédé selon la revendication 3, caractérisé en ce que en tant qu'alcool un utilise l'éthanol.

5. Procédé selon la revendication 4, caractérisé en ce que en tant qu'alcool on utilise l'alcool polyvinylique.

6. Procédé selon la revendication 1, caractérisé en ce que le traitement est un traitement chimique effectué au moyen d'une composition comprenant un solvant diélectrique à base de dérivés fluorés.

7. Procédé selon la revendication 1, caractérisé en ce que le traitement est un traitement chimique associé à un traitement thermique.

8. Procédé selon une des revendications 1 à 7, caractérisé en ce que la résine thermodurcissable est une résine polyester insaturé.

9. Procédé selon une des revendications 1 à 7, caractérisé en ce que la résine thermodurcissable est une résine époxy.

10. Procédé selon une des revendications 1 à 9, caractérisé en ce que pour constituer le renfort, on prépare un matelas de fibres cellulosiques.

11. Procédé selon la revendication 1 à 9, caractérisé en ce que pour constituer le renfort, on prépare un matériau sous la forme de deux feuilles de papier kraft enfermant un matelas plan ou ondulé de fibres cellulosiques.

**Claims**

1. A method of manufacturing a composite material comprising a matrix based upon a thermosetting resin and a reinforcement based upon discontinuous cellulose fibres obtained from a pulp of the papermaking industry selected from among the chemical pulps, the thermo-mechanical pulps, the chemico-thermo-mechanical pulps, a mixture of these pulps, according to which a thermosetting resin, possibly accompanied by a cross-linking accelerator, and a reinforcement are brought together in a mould and conditions of temperature and pressure associated with a dwell time appropriate for assuring the cross-linking of the resin are established in the mould, characterized in that, before the thermosetting resin and the reinforcement based upon cellulose fibres are brought together, a prior treatment of the reinforcement based upon cellulose fibres is carried out, which consists of reducing its water content down to a value of zero or almost zero.

2. A method according to Claim 1, characterized in that the treatment is a thermal treatment, which consists of heating the reinforcement based upon cellulose fibres in conditions such that its water content, after treatment, shall be zero or almost zero, notably a thermal treatment which consists of heating the reinforcement for one hour in a drying oven at 100° C.

3. A method according to Claim 1, characterized in that the treatment is a chemical treatment carried out by means of an oiling composition based essentially upon alcohol.

4. A method according to Claim 3, characterized in that ethanol is used as alcohol.

5. A method according to Claim 4, characterized in that polyvinyl alcohol is used as alcohol.

6. A method according to Claim 1, characterized in that the treatment is a chemical treatment carried out by means of a composition comprising a dielectric solvent based upon derivatives containing fluorine.

7. A method according to Claim 1, characterized in that the treatment is a chemical treatment associated with a thermal treatment.

8. A method according to one of Claims 1 to 7, characterized in that the thermosetting resin is an unsaturated polyester resin.

9. A method according to one of Claims 1 to 7, characterized in that the thermosetting resin is an epoxy resin.

10. A method according to one of Claims 1 to 9, characterized in that, for producing the reinforcement, a mattress of cellulose fibres is prepared.

11. A method according to Claims 1 to 9, characterized in that, for producing the reinforcement, a material is prepared in the form of two sheets of Kraft paper enclosing a flat or undulating mattress of cellulose fibres.


## Ansprüche

1. Verfahren zur Herstellung eines Verbundmaterials, das eine Matrix auf Basis eines hitzehärtbaren Harzes und eine Verstärkung auf Basis diskontinuierlicher Zellulosefasern, die ausgehend von einer aus chemischen Pulpen, thermomechanischen Pulpen, chemisch-thermomechanischen Pulpen sowie eine Mischung dieser Pulpen ausgewählten papierindustriellen Masse erhalten wurden, umfaßt, worin man in einer Mühle ein hitzehärtbares Harz, gegebenenfalls in Begleitung eines Vernetzungsbeschleunigers, und eine Verstärkung zusammengibt und in der Mühle Temperatur- und Druckbedingungen in Verbindung mit einer Aufenthaltsdauer einstellt, die ausreichen, die Vernetzung des Harzes sicherzustellen, dadurch gekennzeichnet, daß man vor dem Zusammengeben des hitzehärtbaren Harzes und der Verstärkung auf Basis der Zellulosefasern eine Vorbehandlung der Verstärkung auf Basis der Zellulosefasern durchführt, die in der Absenkung ihres Wassergehaltes bis auf einen Wert von O oder von quasi O besteht.

2. Verfahren nach Anspruch 1, dadurch gekennzeichnet, daß die Behandlung eine thermische Behandlung ist, die im Erhitzen der Verstärkung auf Basis der Zellulosefasern unter solchen Bedingungen besteht, daß ihr Wassergehalt nach der Behandlung O oder quasi O ist, insbesondere eine thermische Behandlung, die im Erhitzen der Verstärkung während einer Stunde in einem Heizschrank auf 100° C besteht.

3. Verfahren nach Anspruch 1, dadurch gekennzeichnet, daß die Behandlung eine chemische Behandlung ist, die mittels einer Schmälzzusammensetzung auf Basis von im wesentlichen Alkohol durchgeführt wird.

4. Verfahren nach Anspruch 3, dadurch gekennzeichnet, daß man als Alkohol Ethanol verwendet.

5. Verfahren nach Anspruch 3, dadurch gekennzeichnet, daß man als Alkohol Polyvinylalkohol verwendet.

6. Verfahren nach Anspruch 1, dadurch gekennzeichnet, daß die Behandlung eine chemische Behandlung ist, die mit Hilfe einer Zusammensetzung durchgeführt wird, die ein dielektrisches Lösungsmittel auf Basis von fluorierten Derivaten umfaßt.

7. Verfahren nach Anspruch 1, dadurch gekennzeichnet, daß die Behandlung eine mit einer thermischen Behandlung verbundene chemische Behandlung ist.

8. Verfahren nach einem der Ansprüche 1 bis 7, dadurch gekennzeichnet, daß das hitzehärtbare Harz ein ungesättigtes Polyesterharz ist.

9. Verfahren nach einem der Ansprüche 1 bis 7, dadurch gekennzeichnet, daß das hitzehärtbare Harz ein Epoxyharz ist.

10. Verfahren nach einem der Ansprüche 1 bis 9, dadurch gekennzeichnet, daß man zur Bildung der Verstärkung ein Kissen aus Zellulosefasern herstellt.

11. Verfahren nach Anspruch 1 bis 9, dadurch gekennzeichnet, daß man zur Bildung der Verstärkung ein Material in Form von zwei Kraftpapierblättern herstellt, das ein ebenes oder gewelltes Kissen aus Zellulosefasern einschließt.